# EUROPEAN PATENT APPLICATION

(11) **EP 3 561 279 A1**
(43) Date of publication of application: **30.10.2019**
(21) Application number: 19164867.4
(22) Date of filing: 25.03.2019
(51) Int. Cl.: F02K 3/06, F02K 3/115, F02C 6/08, F02C 7/14, F02C 7/18, F02C 9/18

(54) **GAS TURBINE ENGINE**

(30) Priority: 24.04.2018 GB 201806614
(71) Applicant: Rolls-Royce plc, London SW1E 6AT (GB)
(72) Inventor: Bewick, Clare, Derby, Derbyshire DE24 8BJ (GB); Hussain, Zahid, Derby, Derbyshire DE24 8BJ (GB); Scothern, David, Derby, Derbyshire DE24 8BJ (GB); Mason, John, Derby, Derbyshire DE24 8BJ (GB)
(74) Representative: Rolls-Royce plc

(57) **Abstract**

A gas turbine engine (10) comprising: an engine core (11), comprising a compressor (14, 15); an outer casing (25A) separating the engine core (11) from a bypass airflow; a compressor bleed valve (50) in communication with the compressor (14, 15) and configured to release bleed air from the compressor (14, 15); a bleed air duct (51) connected to the compressor bleed valve (50) and configured to eject the bleed air released by the compressor bleed valve (50) into an airflow at a location radially inward of the outer casing (25A).

## Description

The disclosure relates to gas turbine engines, in particular gas turbine engines comprising a compressor bleed valve for releasing bleed air from a compressor.

### Background

Gas turbine engines may require compressor bleed valves to release pressure from compressor stages within the gas turbine engine core. In some gas turbine engines, compressor bleed air is exhausted through outlets within an outer casing of the core into the bypass duct of the engine. In a typical arrangement, a compressor bleed valve is provided in the compressor casing (or inner core casing) and ducted to an aperture in the outer casing. Such arrangements require a reinforced aperture in the outer casing, a seal and a seal land, all of which add weight to the gas turbine engine core. Additionally, exhausting compressor bleed air into the bypass duct risks thermal damage to the nacelle.

Some gas turbine engines comprise cooling systems mounted to the engine core. In some cases, these cooling systems comprise an air-to-oil heat exchanger together with inlet and outlet ducts which open into the inner bypass duct to respectively receive air from the inner bypass duct for cooling and eject the heated air back into the inner bypass duct. In some cases, a number of such cooling systems are mounted on the engine core. Accordingly, the space available for bleed air exhausts is reduced.

It is an aim of the present disclosure to at least partially address the problems with the gas turbine engines discussed above.

### Brief Summary

According to a first aspect there is provided a gas turbine engine comprising: an engine core, comprising a compressor; a casing separating the engine core from a bypass airflow; a compressor bleed valve in communication with the compressor and configured to release bleed air from the compressor; a bleed air duct connected to the compressor bleed valve and configured to eject the bleed air released by the compressor bleed valve into an airflow at a location within the casing.

According to a second aspect, gas turbine engine of the first aspect may further comprise, within the casing: a heat exchanger; an inlet duct arranged upstream of the heat exchanger; and an outlet duct arranged downstream of the heat exchanger; wherein the bleed air duct is connected to the outlet duct at a location radially inward of the outer casing so as to eject the bleed air released by the compressor bleed valve into an airflow within the outlet duct.

Optionally, the inlet duct draws cooling air from the bypass airflow and the outlet duct returns heated air to the bypass airflow.

Optionally, the gas turbine engine further comprises a core exhaust nozzle at a downstream end of the engine core; and optionally, the inlet duct draws cooling air from the bypass airflow and the outlet duct returns heated air to an airflow through the core exhaust nozzle.

Optionally, the bleed air duct is configured to eject bleed air into the outlet duct at a pressure configured to assist driving the airflow through the heat exchanger from the inlet duct to the outlet duct.

Optionally, the bleed air duct comprises an ejector for ejecting the bleed air, the ejector being provided within the outlet duct, extending substantially perpendicular to the airflow through the outlet duct; and comprising one or more apertures facing substantially in a direction of the airflow through the outlet duct configured to eject the bleed air substantially in a direction of the airflow through the outlet duct.

Optionally, the one or more apertures are in the form of a slot extending along the ejector.

Optionally, the one or more apertures are in the form of tubes extending from the ejector.

Optionally, the one or more apertures are in the form of holes in the ejector.

Optionally, the ejector having an aerofoil shape, the aerofoil shape being aligned with the airflow though the outlet duct.

Optionally, the ejector extends from one side of the outlet duct to an opposite side of the outlet duct.

Optionally, a plurality of ejectors are provided within the outlet duct.

Optionally, the plurality of ejectors are provided substantially in a line perpendicular to the airflow through the outlet duct.

Optionally, the bleed air is ejected from one or more slots in a wall of the outlet duct.

Optionally, the bleed air is ejected from one or more pipes extending from a wall of the outlet duct.

Optionally, the bleed air is ejected from one or more perforated sections in a wall of the outlet duct.

Optionally, the one or more slots, one or more pipes, or perforated sections, face substantially in a direction of the airflow through the outlet duct so as to eject the bleed air substantially in a direction of the airflow through the outlet duct.

Optionally, the gas turbine engine comprises a plurality of heat exchangers together with a plurality of respective inlet and outlet ducts, and bleed air from the same bleed valve is ejected into at least two of the plurality of outlet ducts.

According to a third aspect, the gas turbine engine according to the first aspect may further comprise: a core exhaust nozzle arranged at a downstream end of the engine core and radially inward of the outer casing; wherein the airflow is provided through the core exhaust nozzle; and the bleed air duct is configured to eject the bleed air released by the compressor bleed valve into the core exhaust nozzle.

Optionally, the engine core further comprises an inner casing radially inward of the outer casing and surrounding the core exhaust nozzle; wherein the bleed air duct is configured to eject the bleed air through an opening in the inner casing facing the core exhaust nozzle.

According to any of the above aspects, optionally the gas turbine engine comprises high pressure and low pressure compressors, configured to operate at higher and lower pressures respectively, and the compressor bleed valve is connected to the high pressure compressor.

Optionally, the high pressure compressor comprises a plurality of compressor stages respectively configured to operate at increasing pressures, and the compressor bleed valve is connected to the stage of the high pressure compressor configured to operate at the highest pressure.

The gas turbine engine according to any of the above aspects, may further comprise: a turbine and a core shaft connecting the turbine to the compressor, within the engine core; a fan located upstream of the engine core, the fan comprising a plurality of fan blades; a gearbox that receives an input from the at least one core shaft and outputs drive to the fan so as to drive the fan at a lower rotational speed than the at least one core shaft.

Optionally, the engine core comprises a second turbine, a second compressor, and a second core shaft connecting the second turbine to the second compressor; and the second turbine, second compressor, and second core shaft are arranged to rotate at a higher rotational speed than the first core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief Description of the Drawings

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a sectional side view of a gas turbine engine comprising a heat exchanger in accordance with the disclosure;
Figure 5 shows a perspective view of a bleed air valve, bleed air duct and cooling system mounted on an engine core in accordance with the disclosure;
Figure 6 shows a cross sectional side view of a cooling system in accordance with the disclosure;
Figure 7 shows a first example of an ejector;
Figure 8 shows a second example of an ejector;
Figure 9 shows a third example of an ejector;
Figure 10 shows a sectional side view of a bleed air duct connected to a heat exchanger outlet duct in one example;
Figure 11 shows a sectional side view of a bleed air duct connected to a heat exchanger outlet duct in a second example;
Figure 12 shows a sectional side view of a bleed air duct connected to a heat exchanger outlet duct in a third example; and
Figure 13 shows a sectional side view of a gas turbine engine comprising a compressor bleed air valve and a bleed air duct between the bleed air valve and an exhaust nozzle.

### Detailed Description

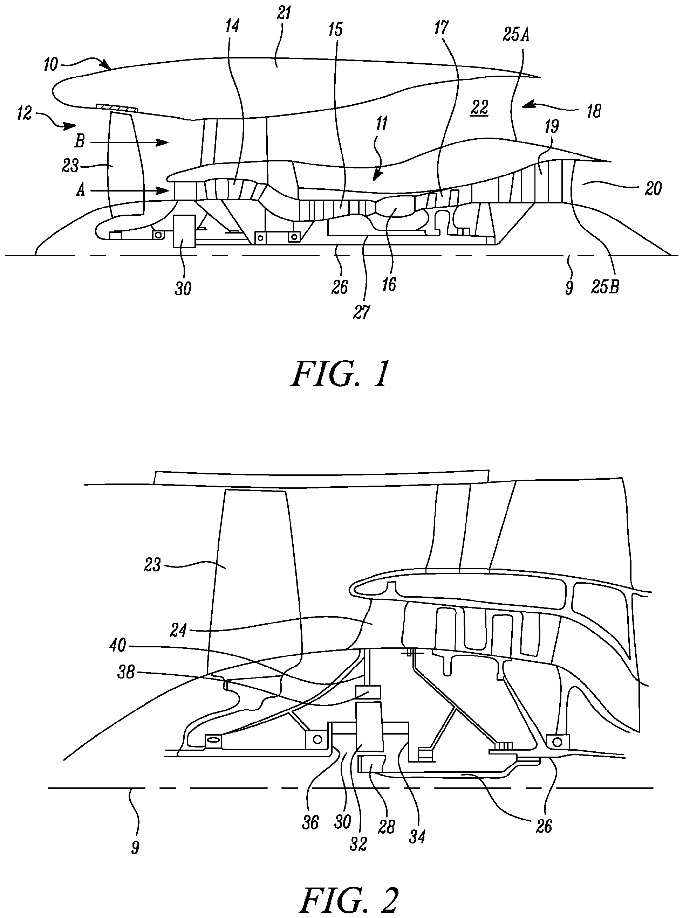

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

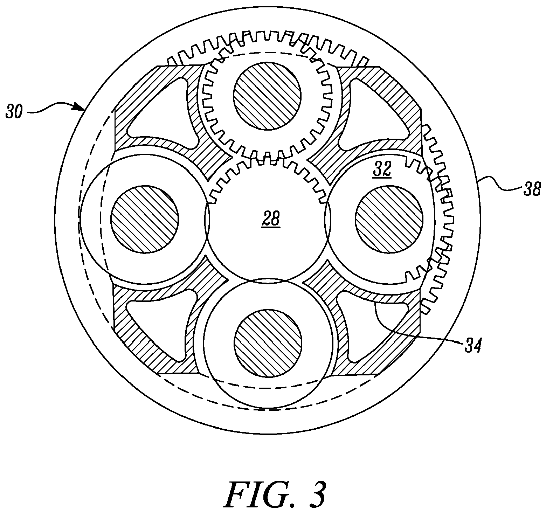

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

The gas turbine engine disclosed herein comprises an engine core 11 comprising a compressor and a casing 25A separating the engine core 11 from the bypass airflow within a bypass duct 22. The gas turbine engine 10 in accordance with the disclosure further comprises a compressor bleed valve 50 in communication with a compressor 14, 15 and configured to release bleed air from the compressor 14,15. The gas turbine engine 10 also comprises a bleed air duct 51 connected to the compressor bleed valve 50 and configured to eject the bleed air released by the compressor bleed valve 50 into an airflow at a location within the casing 25A.

The casing 25A may be a core outer casing or nacelle, i.e. the outer surface of the casing 25A may interface directly with the bypass airflow within the bypass duct 22. "Within the casing" means within a volume enclosed by the casing. The engine core 11 may comprise a further casing 25B. The further casing 25B may be a core inner casing or compressor casing, e.g. surrounding the compressor. Accordingly, the air flow into which the bleed air is ejected may be within a space between the outside of the core inner casing 24 and the inside of the core outer casing 25A. The core inner casing 25B may extend also over other components within the core 11, for example, the combustion equipment 16 and the turbines 17, 19 as well as the compressors 14, 15.

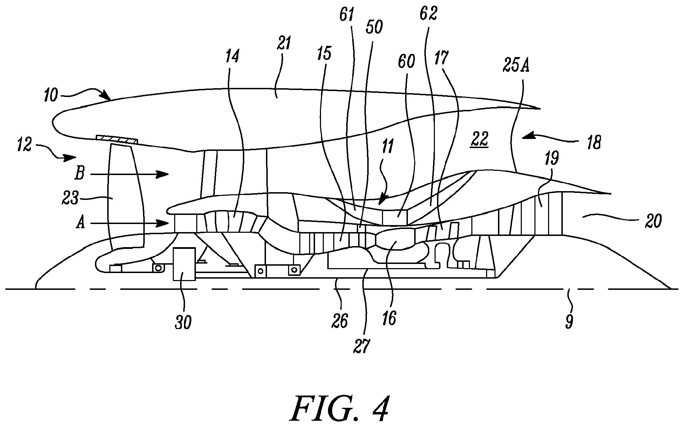

In an example gas turbine engine 10 shown in Figure 4, the gas turbine engine 10 further comprises, within the casing 25A, a cooling system. The cooling system comprises a heat exchanger 60 (e.g. an air-to-oil heat exchanger), an inlet duct 61 arranged upstream of the heat exchanger 61 and an outlet duct 62 arranged downstream of the heat exchanger 60. The inlet duct 61 and the outlet duct 62 form a first circuit of the heat exchanger 60 for providing a cooling airflow. A second circuit of the heat exchanger 60 may be provided by ducts in which oil flows. The oil may be heated within the engine core 11 then flow into the heater exchange 60, where it is cooled by the cooling airflow.

An upstream portion of the inlet duct 61 is connected via an opening in the casing 25A to the bypass duct 22. Accordingly, a portion of the bypass airflow driven by the fan 23 enters the inlet duct 61. A downstream portion of the outlet duct 62 may be connected via another opening in the casing 25A to the bypass duct 22 to return heated air from the heat exchanger 60 to the bypass airflow. Such an arrangement is shown in Figure 4. Alternatively, or additionally, a downstream portion of the outlet duct 62 may be connected via another opening which opens into an exhaust nozzle 20 of the engine core 11. By using the openings in the outer casing 25A for the cooling system airflow also for the compressor bleed air, the number of openings in the casing can be minimised.

The airflow through the cooling system (i.e. through the heat exchanger 60, from the inlet duct 61 to the outlet duct 62) may be primarily driven by the bypass airflow generated by the fan 23. However, the cooling system may be driven by a pump provided for driving the airflow through the cooling system. In an example arrangement, the bleed air duct 51 may be configured to eject bleed air into the outlet duct 62. The bleed air duct 61 may optionally be configured to eject the bleed air at a pressure configured to assist driving of the airflow through the cooling system.

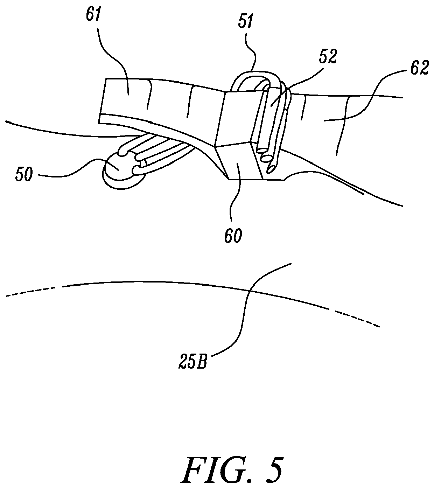

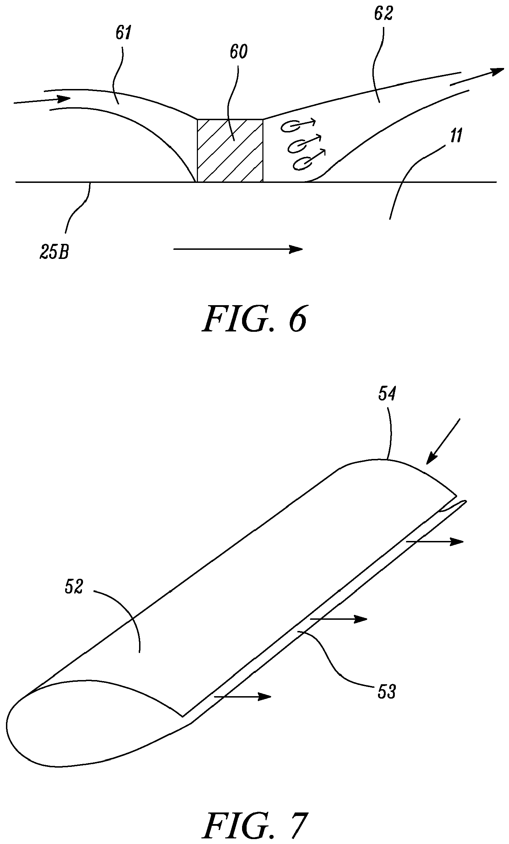

Figures 5 and 6 respectively show perspective and sectional side views of the cooling system connected via the bleed air duct 51 to the bleed air compressor 50, shown in Figure 4. As shown in Figures 5 and 6, the bleed air duct 51 may comprise an ejector 52 for ejecting the bleed air into the outlet duct 62. One bleed air duct 51 may comprise one corresponding ejector 52, as shown in Figure 5. Multiple (e.g. three) ejectors 52 may be provided within the outlet duct 62, together with corresponding bleed air ducts 51. However alternative arrangements are possible. For example, one bleed air duct may comprise multiple ejectors 52, e.g. connected via multiple branches of the bleed air duct 51. The multiple ejectors 52 may be substantially aligned in a direction perpendicular to the airflow through the outlet duct 62. The arrows in Figure 6 show the direction of the air flow through the cooling system.

The ejectors 52 may be provided at an end of the bleed air duct 51. As shown in Figure 5, the ejectors 52 may be provided within the outlet duct 62, extending substantially perpendicularly to the air flow through the outlet duct 62. The ejectors 52 may extend from one side of the outlet duct 62 to an opposite side of the outlet duct 62.

The ejectors 52 may comprise one or more apertures 53 facing substantially in the direction of the airflow through the outlet duct 62. The apertures 53 may thus be configured to eject the bleed air substantially the in the direction of the airflow through the outlet duct 62. This is illustrated in Figure 6 by the arrows from the ejectors 52.

In the arrangement shown in Figures 5 and 6, the ejectors 52 have an aerofoil shape. Although this is not essential, having an aerofoil shape may minimise disruption to the airflow through the cooling system caused by the presence of the ejectors 52. Accordingly, the ejectors 52 are arranged such that the aerofoil shape is in alignment with the airflow through the outlet duct 62.

Various example ejectors 52 are shown in Figures 7 to 9. In each of these Figures, bleed air entering and being ejected from the ejectors is indicated by arrows. It can be seen that the bleed air enters the ejector at one end (i.e. an end connected to the rest of the bleed air duct 51).

In the example shown in Figure 7, the one or more apertures 53 of the ejector 52 is in the form of a slot extending along the ejector 52. In particular, the slot extends along a trailing edge of the aerofoil shape of the ejector 52. The slot 53 is shown in Figure 7 as extending along the entire length of the ejector 52 within the outlet duct 62. However, other arrangements are possible. For example, the slot 53 may extend partially along the ejector 52, or multiple slots may be provided each extending partially along the ejector 52.

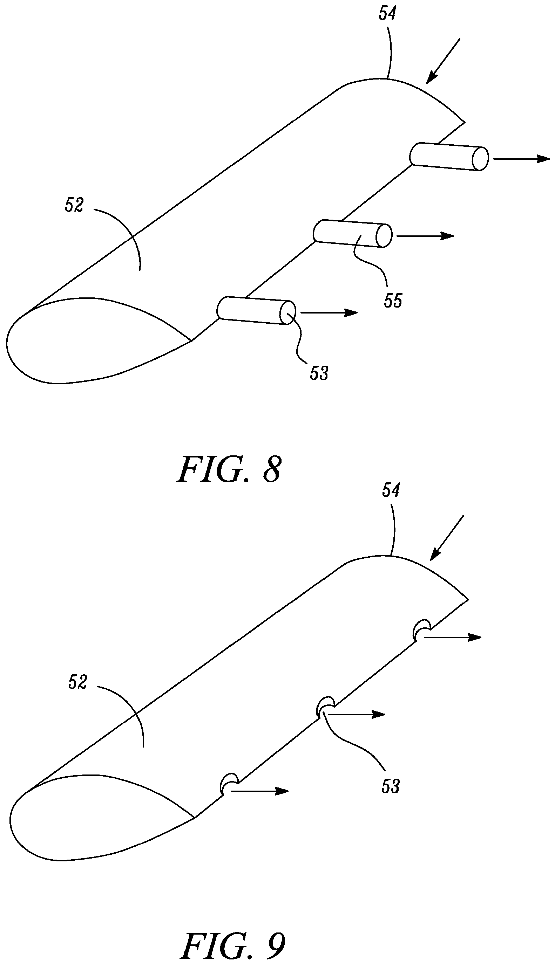

In the example shown in Figure 8, the one or more apertures are in the form of tubes 55 extending from the ejector 52. In particular, as shown in Figure 8, multiple tubes 55 may extend substantially in a direction of the airflow through the outlet duct 62 from the trailing edge of the aerofoil shape of the ejector 52. The tubes 55 may have a substantially circular cross section.

In the example shown in Figure 9, the one or more apertures are in the form of holes 53 in the ejector 52. In particular, multiple holes 53 may be provided in the trailing edge of the aerofoil shape of the ejector 52. As shown in Figure 9, the holes 53 may be substantially circular in shape, as viewed in a direction parallel to the airflow through the outlet duct 62, i.e. end-on to the aerofoil shape.

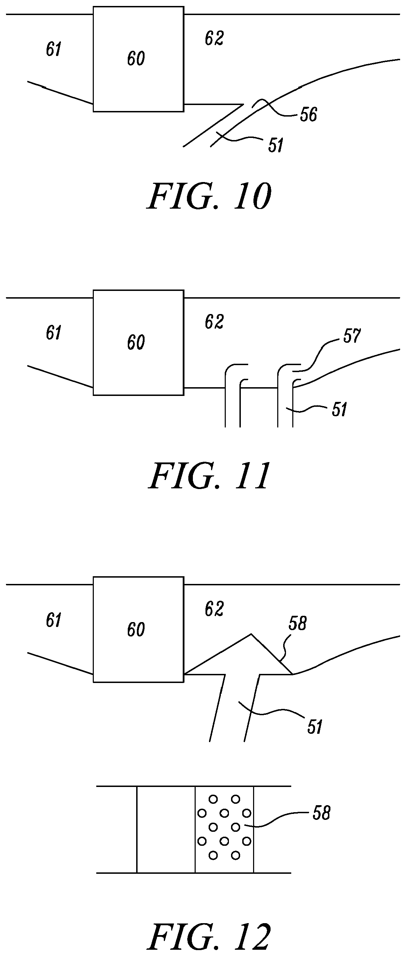

An alternative arrangement to that shown in Figures 5 and 6 is shown in Figure 10. In the arrangement shown in Figure 10, the bleed air is ejected from one or more slots 56 in a wall of the outlet duct 62. As shown in Figure 10, the bleed air duct 51 is connected to the outlet duct 62 via the slot 56. In the arrangement shown in Figure 10, the slot 56 is provided in an inner wall of the outlet duct 62, i.e. a wall closest to the central axis of the engine core 11. However alternative arrangements are possible. For example, the slot 56 may be provided in an outer wall (i.e. a wall furthest from the central axis of the engine core 11) or side walls of the outlet duct 62. Further, multiple slots 56 may be provided in the outlet duct 62. Multiple slots 56 may be provided in the same wall or different walls of the outlet duct 62. The slots 56 may face substantially in the direction of the airflow through the outlet duct 62. Accordingly, the bleed air is ejected substantially in the direction of airflow through the outlet duct 62.

An alternative arrangement to that shown in Figure 10 is shown in Figure 11. In the arrangement shown in Figure 11, the bleed air is ejected from one or more pipes 57 extending from a wall of the outlet duct 62. As shown in figure 11, the bleed air duct 51 is connected through the wall of the outlet duct 62 to the pipes 57. In the arrangement shown in Figure 10, the pipes 57 are provided in an inner wall of the outlet duct 62. However alternative arrangements are possible. For example, the pipes 57 may be provided in an outer wall or side walls of the outlet duct 62. Further, multiple pipes 57 may be provided in the outlet duct 62. Multiple pipes 57 may be provided in the same wall or different walls of the outlet duct 62. An outlet of the pipes 57 may face substantially in the direction of the airflow through the outlet duct 62. Accordingly, the bleed air is ejected substantially in the direction of airflow through the outlet duct 62.

A further alternative arrangement to that shown in Figure 10 is shown in Figure 12. In the arrangement shown in Figure 12, the bleed air is ejected from one or more perforated sections 58 in a wall of the outlet duct 62. As shown in Figure 12, the bleed air duct 51 is connected to the outlet duct 62 via the perforated sections 58. In the arrangement shown in Figure 10, the perforated section 58 is provided in an inner wall of the outlet duct 62. However alternative arrangements are possible. For example, the perforated sections 58 may be provided in an outer wall or side walls of the outlet duct 62. Further, multiple perforated sections 58 may be provided in the outlet duct. Multiple perforated sections 58 may be provided in the same wall or different walls of the outlet duct 62. The perforated sections 58 may face substantially in the direction of the airflow through the outlet duct. Accordingly, the bleed air is ejected substantially in the direction of airflow through the outlet duct 62. As shown in Figure 12, the perforated section 58 may cover an opening in the outlet duct 62 connected to the bleed air duct 51. The second part of Figure 12 shows a plan view of the perforated sections 58. The perforated section 58 may comprise a plurality of perforations. The perforations may be in the form of substantially circular holes.

Combinations of the examples shown in Figures 5 and 6, 10, 11 and 12 may be used. For example, bleed air may be ejected into the outlet duct 62 via any combination of ejectors 52, slots 56, pipes 57 and perforated sections 58.

The gas turbine engine 10 may comprise a plurality of cooling systems. Each cooling system may comprise a heat exchanger 60 together with respective inlet ducts 61 and outlet ducts 62. In such arrangements, bleed air from the same bleed valve 50 may be ejected into at least two of the plurality of outlet ducts 62. In a specific example, two cooling systems may be provided on the engine core 11 and one bleed air valve 50 may provide bleed air to both outlet ducts 62. Alternatively, multiple bleed air valves 50 may feed into a single outlet duct 62 by way of any of the above described arrangements.

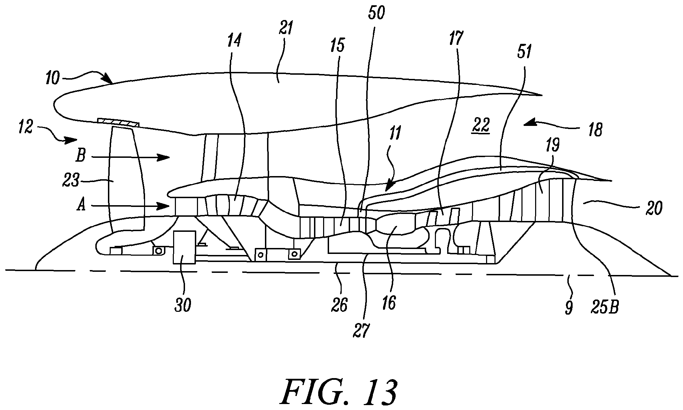

Figure 13 shows an alternative arrangement to that shown in Figure 4. The arrangement shown in Figure 13 may be used in a case where the engine core 11 does not include a cooling system. However, the arrangement shown in Figure 13 may be used also when a cooling system is present, e.g. in combination with the above described arrangements.

As shown in Figure 13, the bleed air duct 51 may extend between the bleed air valve 50 and the core exhaust nozzle 20. Accordingly, the bleed air duct 51 is configured to eject the bleed air released by the compressor bleed valve 50 into the core exhaust nozzle 20 airflow. The engine core 11 may comprise an inner casing 25B. The bleed air duct 51 may be connected to the nozzle 20 via an opening in the inner casing 25B facing the exhaust nozzle 20. The opening in the inner casing 25B and the bleed air duct 51 may be configured to eject the bleed air into the core exhaust 20 substantially in the direction of the core nozzle airflow. The bleed air duct 51, may be provided completely between the outer casing 25A and the inner casing 25B.

The compressor bleed valve 50 may be connected to the high pressure compressor 15. The high pressure compressor 15 may comprise a plurality of compressor stages. Each compressor stage may respectively be configured to operate at increasing pressures closer to the downstream end of the engine core 11. The compressor bleed valve 50 may be connected, for example, to the highest pressure stage of the high pressure compressor 15. In one specific example, the high pressure compressor 15 may comprise seven compressor stages and the compressor bleed valve 50 may be connected to the seventh compressor stage. However, alternatively the compressor bleed valve 50 may be connected to a compressor stage other than the highest compressor stage, for example the fifth of seven compressor stages.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A gas turbine engine (10) comprising:
an engine core (11), comprising a compressor (14, 15);
an outer casing (25A) separating the engine core (11) from a bypass airflow;
a compressor bleed valve (50) in communication with the compressor (14, 15) and configured to release bleed air from the compressor (14, 15);
a bleed air duct (51) connected to the compressor bleed valve (50) and configured to eject the bleed air released by the compressor bleed valve (50) into an airflow at a location radially inward of the outer casing (25A).

2. The gas turbine engine (10) of claim 1, further comprising, within the casing (25A):
a heat exchanger (60);
an inlet duct (61) arranged upstream of the heat exchanger (60); and
an outlet duct (62) arranged downstream of the heat exchanger (60); wherein
the bleed air duct (51) is connected to the outlet duct (62) at a location radially inward of the outer casing (25A) so as to eject the bleed air released by the compressor bleed valve (50) into an airflow within the outlet duct (62).

3. The gas turbine engine (10) of claim 2, wherein the inlet duct (61) draws cooling air from the bypass airflow and the outlet duct returns heated air to the bypass airflow.

4. The gas turbine engine (10) of claim 2, further comprising a core exhaust nozzle (20) at a downstream end of the engine core (11);
wherein the inlet duct (61) draws cooling air from the bypass airflow and the outlet duct (62) returns heated air to an airflow through the core exhaust nozzle (20).

5. The gas turbine engine (10) of claim 2, wherein the bleed air duct (50) is configured to eject bleed air into the outlet duct (62) at a pressure configured to assist driving the airflow through the heat exchanger (60) from the inlet duct (61) to the outlet duct (62).

6. The gas turbine engine (10) according to any one of claims 2 to 5, wherein the bleed air duct (51) comprises an ejector (52) for ejecting the bleed air,
the ejector (52) being provided within the outlet duct (62), extending substantially perpendicular to the airflow through the outlet duct (62); and
the ejector (52) comprising one or more apertures (53) facing substantially in a direction of the airflow through the outlet duct (62) configured to eject the bleed air substantially in a direction of the airflow through the outlet duct (62).

7. The gas turbine engine (10) according to claim 6, the ejector (52) having an aerofoil shape, the aerofoil shape being aligned with the airflow though the outlet duct (62).

8. The gas turbine engine (10) according to claim 6 or claim 7, wherein the ejector (52) extends from one side of the outlet duct (62) to an opposite side of the outlet duct (62).

9. The gas turbine engine (10) according to any one of claims 6 to 8, wherein a plurality of ejectors (52) are provided within the outlet duct, substantially in a line perpendicular to the airflow through the outlet duct (62).

10. The gas turbine engine (10) according to claim 9, wherein the bleed air is ejected substantially in a direction of the airflow through the outlet duct (62).

11. The gas turbine engine (10) according to any one of claims 3 to 10, wherein the gas turbine engine (10) comprises a plurality of heat exchangers (60) together with a plurality of respective inlet and outlet ducts (61, 62), and bleed air from the compressor bleed valve (50) is ejected into at least two of the plurality of outlet ducts (62).

12. The gas turbine engine (10) according to claim 1, further comprising:
a core exhaust nozzle (20) arranged at a downstream end of the engine core (11) and radially inward of the outer casing (25A);
wherein the airflow is provided through the core exhaust nozzle (20); and
the bleed air duct (51) is configured to eject the bleed air released by the compressor bleed valve (50) into the core exhaust nozzle (20).

13. The gas turbine engine (10) according to claim 12, the engine core (11) further comprising an inner casing (25B) radially inward of the outer casing (25A) and surrounding the core exhaust nozzle (20); wherein
the bleed air duct (51) is configured to eject the bleed air through an opening in the inner casing (25B) facing the core exhaust nozzle (20).

14. The gas turbine engine (10) according to any preceding claim, wherein the gas turbine engine (10) comprises high pressure (15) and low pressure (14) compressors, configured to operate at higher and lower pressures respectively, and the compressor bleed valve (50) is connected to the high pressure compressor (15).

15. The gas turbine engine (10) according to claim 14, wherein the high pressure compressor (15) comprises a plurality of compressor stages respectively configured to operate at increasing pressures, and the compressor bleed valve (50) is connected to the stage of the high pressure compressor (15) configured to operate at the highest pressure.
